# EUROPEAN PATENT APPLICATION

(11) **EP 2 988 208 A1**
(43) Date of publication of application: **24.02.2016**
(21) Application number: 14837727.8
(22) Date of filing: 18.08.2014
(51) Int. Cl.: G06F 9/445

(54) **APPLICATION SHARING METHOD AND DEVICE**

(30) Priority: 19.08.2013 CN 201310362203
(71) Applicant: Huawei Device Co., Ltd., Shenzhen, Guangdong 518129 (CN)
(72) Inventor: YU, Xin, Shenzhen Guangdong 518129 (CN); PANG, Nana, Shenzhen Guangdong 518129 (CN)
(74) Representative: Körber, Martin Hans
(86) International application number: PCT/CN2014/084626
(87) International publication number: WO 2015/024494

(57) **Abstract**

In embodiments of the present invention, it is detected that an icon, on a desktop of a terminal device, of an application is associated with a share button; a storage location, of an installation file of the application, in the terminal device is determined; the installation file, to which the storage location points, of the application is sent, according to the storage location, of the installation file of the application, in the terminal device, to a terminal device with which the installation file needs to be shared; and therefore, a storage location, of an installation file of an application, in the terminal device can be automatically located by operating an icon of the application, and a user does not need to manually operate a file management tool to search for an installation file of a to-be-shared application, which not only is easy to operate, but also can reduce an application sharing time from five minutes to ten seconds, thereby improving application sharing efficiency.

## Description

This application claims priority to Chinese Patent Application No. 201310362203.0, filed with the Chinese Patent Office on August 19, 2013, and entitled "APPLICATION SHARING METHOD AND APPARATUS", which is incorporated herein by reference in its entirety.

### TECHNICAL FIELD

Embodiments of the present invention relate to the field of terminal device technologies, and in particular, to an application sharing method and apparatus.

### BACKGROUND

At present, when a user shares an application installed in a terminal device with another person, the user needs to manually operate a file management tool to find an installation file of the to-be-shared application in a folder, only after which can the application be shared.

It usually takes the user about five minutes to find the installation file of the to-be-shared application in the folder by manually operating the file management tool. If the to-be-shared application has been installed for a very long time, the user may forget the folder that stores the installation file of the to-be-shared application, and it needs to take the user a longer time to find the installation file of the to-be-shared application.

Therefore, in a conventional application sharing method, a user needs to manually operate a file management tool to find an installation file of a to-be-shared application, and a problem of inconvenient operation exists; further, it takes a relatively long time to manually operate the file management tool to search for the installation file of the to-be-shared application, which reduces application sharing efficiency.

### SUMMARY

Embodiments of the present invention provide an application sharing method and apparatus, which are easy to operate, and can improve application sharing efficiency.

According to a first aspect, an application sharing method is provided, including:
detecting that an icon, on a desktop of a terminal device, of an application is associated with a share button;
determining a storage location, of an installation file of the application, in the terminal device; and
sending the installation file, to which the storage location points, of the application to a terminal device with which the installation file needs to be shared.

With reference to the first aspect, in a first possible implementation manner of the first aspect, the detecting that an icon, on a desktop of a terminal device, of an application is associated with a share button includes:
detecting that the icon of the application is selected, and the share button is selected.

With reference to the first aspect, in a second possible implementation manner of the first aspect, the detecting that an icon, on a desktop of a terminal device, of an application is associated with a share button includes:
detecting that a distance between the icon of the application and the share button is less than a preset threshold.

With reference to any one of the first aspect to the second possible implementation manner of the first aspect, in a third possible implementation manner of the first aspect, the determining a storage location, of an installation file of the application, in the terminal device includes:
searching for the installation file, which is stored in the terminal device, of the application according to information about the application, to determine the storage location, of the installation file of the application, in the terminal device.

With reference to any one of the first aspect to the second possible implementation manner of the first aspect, in a fourth possible implementation manner of the first aspect, the method further includes: saving in advance, information about the application, and the storage location, of the installation file of the application, in the terminal device, in a correspondence table of the information about the application and the storage location, of the installation file of the application, in the terminal device; and
the determining a storage location, of an installation file of the application, in the terminal device includes:
searching the correspondence table according to the information about the application, to determine the storage location, of the installation file of the application, in the terminal device.

According to a second aspect, an application sharing apparatus is provided, including:
a detection module, configured to detect that an icon, on a desktop of a terminal device, of an application is associated with a share button;
a determining module, configured to determine a storage location, of an installation file of the application, in the terminal device; and
a sharing module, configured to send the installation file, to which the storage location points, of the application to a terminal device with which the installation file needs to be shared.

With reference to the second aspect, in a first possible implementation manner of the second aspect, the detection module is specifically configured to detect that the icon of the application is selected, and the share button is selected.

With reference to the second aspect, in a second possible implementation manner of the second aspect, the detection module is specifically configured to detect that a distance between the icon of the application and the share button is less than a preset threshold.

With reference to any one of the second aspect to the second possible implementation manner of the second aspect, in a third possible implementation manner of the second aspect, the determining module is specifically configured to search for the installation file, which is stored in the terminal device, of the application according to information about the application, to determine the storage location, of the installation file of the application, in the terminal device.

With reference to any one of the second aspect to the second possible implementation manner of the second aspect, in a fourth possible implementation manner of the second aspect, the apparatus further includes a storage module, configured to save information about the application, and the storage location, of the installation file of the application, in the terminal device, in a correspondence table of the information about the application and the storage location of the installation file of the application; and
the determining module is specifically configured to search the correspondence table according to the information about the application, to determine the storage location, of the installation file of the application, in the terminal device.

In the embodiments of the present invention, it is detected that an icon, on a desktop of a terminal device, of an application is associated with a share button; a storage location, of an installation file of the application, in the terminal device is determined; the installation file, to which the storage location points, of the application is sent, according to the storage location, of the installation file of the application, in the terminal device, to a terminal device with which the installation file needs to be shared; and therefore, a storage location, of an installation file of an application, in the terminal device can be automatically located by operating an icon of the application, and a user does not need to manually operate a file management tool to search for an installation file of a to-be-shared application, which not only is easy to operate, but also can reduce an application sharing time from five minutes to ten seconds, thereby improving application sharing efficiency.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show some embodiments of the present invention, and persons of ordinary skill in the art may still derive other drawings from these accompanying drawings without creative efforts.
FIG. 1 is a schematic flowchart of an application sharing method according to an embodiment of the present invention;
FIG. 2 is a schematic diagram of a share button according to an embodiment of the present invention;
FIG. 3 is a schematic diagram of another share button according to an embodiment of the present invention;
FIG. 4 is a schematic diagram showing that an icon of an application is associated with a share button according to an embodiment of the present invention;
FIG. 5 is a schematic structural diagram of an application sharing apparatus according to an embodiment of the present invention; and
FIG. 6 is a schematic structural diagram of a terminal device according to an embodiment of the present invention.

### DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are some but not all of the embodiments of the present invention. All other embodiments obtained by persons of ordinary skill in the art based on the embodiments of the present invention without creative efforts shall fall within the protection scope of the present invention.

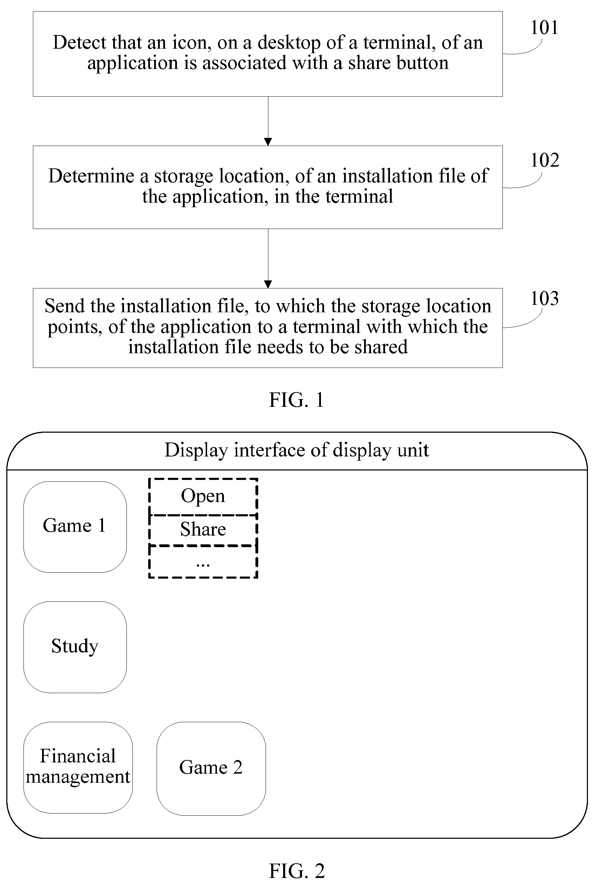

FIG. 1 is a schematic flowchart of an application sharing method according to an embodiment of the present invention. As shown in FIG. 1, the application sharing method of this embodiment may include:
Step 101: Detect that an icon, on a desktop of a terminal device, of an application is associated with a share button.

After a user installs an application in a terminal device by using an installation file, an icon of the application is displayed on a desktop of the terminal device.

A share button is an icon of an application that performs a sharing function, that is, information that needs to be shared may be sent by operating the share button.

When needing to share an application, the user may operate an icon of the to-be-shared application, to associate the icon of the application with the share button.

In an optional implementation manner of the present invention, the terminal device has a mouse, and step 101 includes:
detecting that the icon of the application is selected; specifically, clicking, by the user, the icon of the application by operating the mouse;
displaying the share button, which may be specifically displaying an operation menu after a right-click of the mouse is detected, where the operation menu includes the share button, and the share button may be displayed in a form of an option of the operation menu (as shown in FIG. 2); and
detecting that the share button is selected, indicating that the icon of the application is associated with the share button, which may be specifically detecting that a cursor is moved to the share button and detecting a left-click of the mouse, indicating that the share button is selected.

In an optional implementation manner of the present invention, step 101 includes:
detecting that a distance between the icon of the application and the share button is less than a preset threshold.

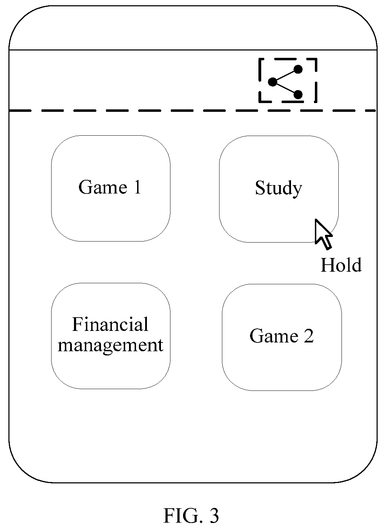

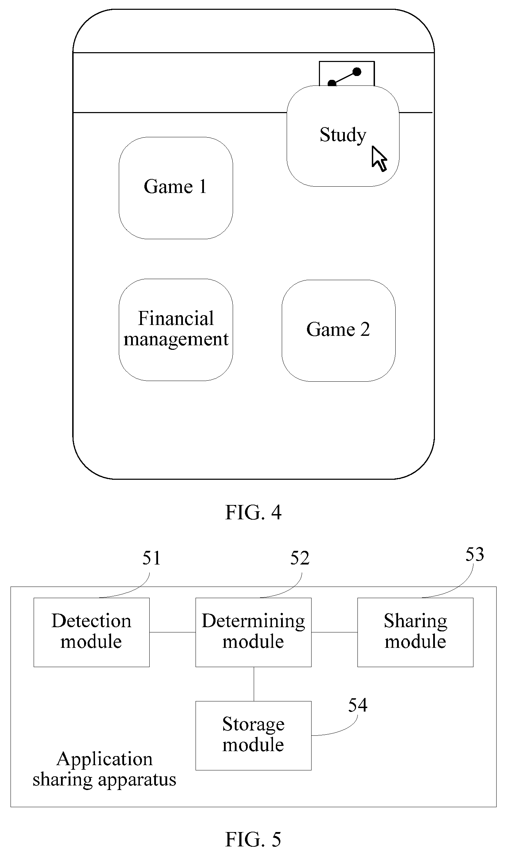

When needing to share an application, the user may drag an icon of the application to the share button (as shown in FIG. 4). The share button may always be displayed on the desktop, or may be displayed after the icon of the application is selected (for example, held) (as shown in FIG. 3). The terminal device detects a distance between the icon of the application and the share button, and when the distance between the icon of the application and the share button is less than the preset threshold, the icon of the application is associated with the share button.

In an optional implementation manner of the present invention, step 101 includes:
when the desktop of the terminal device is in an editable state, detecting that the icon of the application and the share icon are selected.

When needing to share an application, the user may operate the terminal device so that the desktop of the terminal device is in the editable state, that is, at this time, the user may edit an icon on the desktop of the terminal device in an editing manner such as deletion, sharing, or sorting; an icon of each application may be displayed in a floating manner; and the user selects the share button after selecting an icon of the to-be-shared application, and the icon of the application is associated with the share button.

When the terminal device has multiple sharing manners, after the detecting that an icon, on a desktop of a terminal device, of an application is associated with a share button, the method further includes: detecting that a specific sharing manner is selected.

The terminal device may have multiple sharing manners; for example, an application may be shared in a short-distance communications manner such as by means of Bluetooth or Wi-Fi (Wireless Fidelity, wireless fidelity), or in a manner of using a messaging application such as a multimedia message or an email, or a social application such as QQ or facebook. The user may select one sharing manner.

Step 102: Determine a storage location, of an installation file of the application, in the terminal device.

When it is detected that the icon of the application is associated with the share button, the storage location of the installation file of the application needs to be determined.

Specifically, a memory of the terminal device may be searched for the installation file of the application according to information about the application, so as to determine the storage location, of the installation file of the application, in the terminal device. The information about the application includes an identifier, a name, or the like of the application.

Alternatively, in an optional implementation manner of the present invention, when an installation file is run to install an application, information about the application and a corresponding storage location of the installation file of the application are recorded, and may be saved as a correspondence table of the information about the application and the corresponding storage location of the installation file of the application. Step 102 may specifically include: searching the correspondence table of the information about the application and the storage location of the installation file of the application according to the information about the application, to determine the storage location of the installation file of the application.

Step 103: Send the installation file, to which the storage location points, of the application to a terminal device with which the installation file needs to be shared.

During specific implementation, after the terminal device determines the storage location, of the installation file of the application, in the terminal device, the storage location (storage path of the installation file of the application) may be used as a path parameter of a sending instruction, and therefore, the installation file, to which the storage location points, of the application can be sent to the terminal device with which the installation file needs to be shared.

The installation file may be sent, in a short-distance communications manner such as by means of Bluetooth or Wi-Fi, to the terminal device with which the installation file needs to be shared, or may be sent, by using a social application such as QQ or facebook, to the terminal device with which the installation file needs to be shared, or may be sent, by using a messaging application such as a multimedia message or an email, to the terminal device with which the installation file needs to be shared.

For example, the user selects a manner of sharing using Bluetooth, and a Bluetooth sending interface is entered. If a terminal device operated by the user has been paired with the terminal device with which the installation file needs to be shared, the user selects the Bluetooth paired terminal device, to send by means of Bluetooth, the installation file to the terminal device with which the installation file needs to be shared. If Bluetooth is not yet activated, the user activates Bluetooth, and Bluetooth pairs the terminal device operated by the user with the terminal device with which the installation file needs to be shared, and after a successful configuration, sends, by means of Bluetooth, the installation file to the terminal device with which the installation file needs to be shared.

In this embodiment of the present invention, it is detected that an icon, on a desktop of a terminal device, of an application is associated with a share button; a storage location, of an installation file of the application, in the terminal device is determined; the installation file, to which the storage location points, of the application is sent, according to the storage location, of the installation file of the application, in the terminal device, to a terminal device with which the installation file needs to be shared; and therefore, a storage location, of an installation file of an application, in the terminal device can be automatically located by operating an icon of the application, and a user does not need to manually operate a file management tool to search for an installation file of a to-be-shared application, which not only is easy to operate, but also can reduce an application sharing time from five minutes to ten seconds, thereby improving application sharing efficiency.

FIG. 5 is a schematic structural diagram of an application sharing apparatus according to an embodiment of the present invention. The application sharing apparatus is located on a terminal device side, and as shown in FIG. 5, includes:
a detection module 51, configured to detect that an icon, on a desktop of a terminal device, of an application is associated with a share button;
a determining module 52, configured to determine a storage location, of an installation file of the application, in the terminal device; and
a sharing module 53, configured to send the installation file, to which the storage location points, of the application to a terminal device with which the installation file needs to be shared.

In an implementable manner of the present invention, the detection module 51 is specifically configured to:
detect that the icon of the application is selected, and the share button is selected; or
detect that a distance between the icon of the application and the share button is less than a preset threshold.

The determining module 52 may search for the installation file of the application according to information about the application, and may determine the storage location, of the installation file of the application, in the terminal device after finding the installation file of the application.

In an implementable manner of the present invention, the apparatus may further include:
a storage module 54, configured to save information about the application, and the storage location, of the installation file of the application, in the terminal device, in a correspondence table of the information about the application and the storage location of the installation file of the application, where specifically, when the application is installed by using the installation file of the application, the storage module 54 may save the information about the application, and the corresponding installation file of the application in the correspondence table.

The determining module 52 searches, when the detection module 51 detects that the icon of the application is associated with the share button, the correspondence table of the information about the application and the installation file of the application according to the information about the application, to determine the storage location, of the installation file of the application, in the terminal device.

In an implementable manner of the present invention, the sharing module 53 is specifically configured to:
send, to the terminal device with which the installation file needs to be shared, the installation file, to which the storage location points, of the application in a short-distance communications manner such as by means of Bluetooth or Wi-Fi, or send, to the terminal device with which the installation file needs to be shared, the installation file, to which the storage location points, of the application by using a social application or a messaging application.

In this embodiment of the present invention, it is detected that an icon, on a desktop of a terminal device, of an application is associated with a share button; a storage location, of an installation file of the application, in the terminal device is determined; the installation file, which is pointed to by the storage location, of the application is sent, according to the storage location, of the installation file of the application, in the terminal device, to a terminal device with which the installation file needs to be shared; and therefore, a storage location, of an installation file of an application, in the terminal device can be automatically located by operating an icon of the application, and a user does not need to manually operate a file management tool to search for an installation file of a to-be-shared application, which not only is easy to operate, but also can reduce an application sharing time from five minutes to ten seconds, thereby improving application sharing efficiency.

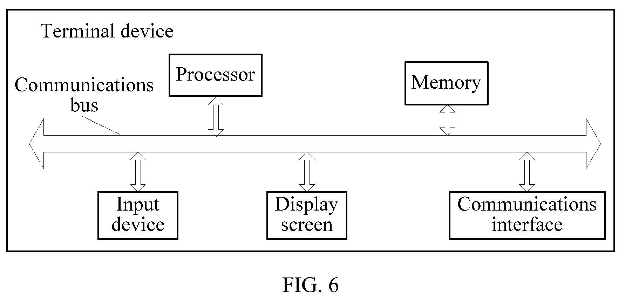

FIG. 6 is a schematic structural diagram of a terminal device according to an embodiment of the present invention. The terminal device includes but is not limited to a mobile phone, a computer, and a tablet. As shown in FIG. 6, the terminal device includes a processor, a memory, a display screen, a communications interface, and an input device, where the processor, the memory, the display screen, the communications interface, and the input device are connected by using a communications bus.

The memory saves code that is used to implement an application sharing method and user data, and the user data includes an installation file of an application.

The display screen is configured to display output of the terminal device, for example, an icon of an application installed in the terminal device.

The communications interface is configured to communicate with another terminal device, where the communications interface may be an interface for communicating with a wireless network (network such as a GSM network, a CDMA network, or a TD-SCDMA network); or may be an interface for communicating with a wired network, such as an RS232 interface; or may also be a short-distance communications interface, such as a Bluetooth interface or a Wi-Fi interface.

The input device may include at least one of a mouse and a touchpad, and is configured to receive input of a user. When the processor invokes the code in the memory, the following steps may be performed:
detecting, according to input of the user that is received by the input device, that a mouse, on a desktop of the terminal device, of an application is associated with a share button;
determining a storage location, of an installation file of the application, in the memory; and
sending the installation file, to which the storage location points, of the application to a terminal device with which the installation file needs to be shared, where specifically, the installation file may be sent by invoking a corresponding communications interface and according to a sharing manner selected by the user.

In this embodiment of the present invention, that an icon, on a desktop of the terminal device, of an application is associated with a share button includes:
detecting that the icon of the application is selected, and the share button is selected; or
detecting that a distance between the icon of the application and the share button is less than a preset threshold.

According to an implementable manner of the present invention, information about the application, and the storage location, of the installation file of the application, in the terminal device are saved in a correspondence table of the information about the application and the storage location of the installation file of the application, and the correspondence table may be stored in the memory.

According to an implementation manner of the present invention, when the terminal device has multiple sharing manners, after the detecting that an icon, on a desktop of the terminal device, of an application is associated with a share button, the method further includes: detecting that a specific sharing manner is selected.

The terminal device may have multiple sharing manners; for example, an application may be shared in a manner such as by means of Bluetooth or Wi-Fi, or by using a social application. The user may select one sharing manner.

The sharing the installation file, to which the storage location points, of the application includes:
sending, to the terminal device with which the installation file needs to be shared, the installation file, to which the storage location points, of the application in a short-distance communications manner such as by means of Bluetooth or Wi-Fi, or sending, to the terminal device with which the installation file needs to be shared, the installation file, to which the storage location points, of the application by using a social application, or sending, to the terminal device with which the installation file needs to be shared, the installation file, to which the storage location points, of the application by using a messaging application.

In this embodiment of the present invention, it is detected that an icon, on a desktop of a terminal device, of an application is associated with a share button; a storage location, of an installation file of the application, in the terminal device is determined; the installation file, which is pointed to by the storage location, of the application is sent, according to the storage location, of the installation file of the application, in the terminal device, to a terminal device with which the installation file needs to be shared; and therefore, a storage location, of an installation file of an application, in the terminal device can be automatically located by operating an icon of the application, and a user does not need to manually operate a file management tool to search for an installation file of a to-be-shared application, which not only is easy to operate, but also can reduce an application sharing time from five minutes to ten seconds, thereby improving application sharing efficiency.

In the several embodiments provided in this application, it should be understood that the disclosed system, apparatus, and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit. The integrated unit may be implemented in a form of hardware, or may be implemented in a form of hardware in addition to a software functional unit.

When the foregoing integrated unit is implemented in a form of a software functional unit, the integrated unit may be stored in a form of code in a computer-readable storage medium. The code is stored in the computer-readable storage medium, and includes several instructions for instructing a processor or a hardware circuit to perform all or some of the steps of the methods described in the embodiments of the present invention. The foregoing storage medium includes any medium that can store program code, such as a micro and high capacity removable storage disc that has a universal serial bus and needs no physical drive, a removable hard disk, a read-only memory (Read-Only Memory in English, ROM for short), a random access memory (Random Access Memory in English, RAM for short), a magnetic disk, or an optical disc.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some technical features thereof, without departing from the protection scope of the technical solutions of the embodiments of the present invention.

## Claims

1. An application sharing method, comprising:
detecting that an icon, on a desktop of a terminal device, of an application is associated with a share button;
determining a storage location, of an installation file of the application, in the terminal device; and
sending the installation file, to which the storage location points, of the application to a terminal device with which the installation file needs to be shared.

2. The method according to claim 1, wherein the detecting that an icon, on a desktop of a terminal device, of an application is associated with a share button comprises:
detecting that the icon of the application is selected, and the share button is selected.

3. The method according to claim 1, wherein the detecting that an icon, on a desktop of a terminal device, of an application is associated with a share button comprises:
detecting that a distance between the icon of the application and the share button is less than a preset threshold.

4. The method according to any one of claims 1 to 3, wherein the determining a storage location, of an installation file of the application, in the terminal device comprises:
searching for the installation file, which is stored in the terminal device, of the application according to information about the application, to determine the storage location, of the installation file of the application, in the terminal device.

5. The method according to any one of claims 1 to 3, wherein the method further comprises:
saving in advance, information about the application, and the storage location, of the installation file of the application, in the terminal device, in a correspondence table of the information about the application and the storage location, of the installation file of the application, in the terminal device; and
the determining a storage location, of an installation file of the application, in the terminal device comprises:
searching the correspondence table according to the information about the application, to determine the storage location, of the installation file of the application, in the terminal device.

6. An application sharing apparatus, comprising:
a detection module, configured to detect that an icon, on a desktop of a terminal device, of an application is associated with a share button;
a determining module, configured to determine a storage location, of an installation file of the application, in the terminal device; and
a sharing module, configured to send the installation file, to which the storage location points, of the application to a terminal device with which the installation file needs to be shared.

7. The apparatus according to claim 6, wherein the detection module is specifically configured to detect that the icon of the application is selected, and the share button is selected.

8. The apparatus according to claim 6, wherein the detection module is specifically configured to detect that a distance between the icon of the application and the share button is less than a preset threshold.

9. The apparatus according to any one of claims 6 to 8, wherein the determining module is specifically configured to search for the installation file, which is stored in the terminal device, of the application according to information about the application, to determine the storage location, of the installation file of the application, in the terminal device.

10. The apparatus according to any one of claims 6 to 8, wherein the apparatus further comprises a storage module, configured to save information about the application, and the storage location, of the installation file of the application, in the terminal device, in a correspondence table of the information about the application and the storage location of the installation file of the application; and
the determining module is specifically configured to search the correspondence table according to the information about the application, to determine the storage location, of the installation file of the application, in the terminal device.
